# EUROPEAN PATENT SPECIFICATION

(11) **EP 4 593 584 B1**
(45) Date of publication and mention of the grant of the patent: **07.10.2026**
(21) Application number: 23749185.7
(22) Date of filing: 03.08.2023
(51) Int. Cl.: A01G 9/04, A01G 9/029, A01C 1/02

(54) **HYDROPONICS SYSTEM, USE OF SUCH A SYSTEM, AND A METHOD FOR THE GERMINATION OF SEEDS, AND GROWTH OF SPROUTS, SEEDLINGS, AND PLANTS**
HYDROKULTURSYSTEM, VERWENDUNG SOLCH EINES SYSTEMS UND VERFAHREN ZUR KEIMUNG VON SAMEN UND WACHSTUM VON KEIMUNGEN, SÄMLINGEN UND PFLANZEN
SYSTÈME HYDROPONIQUE, UTILISATION D'UN TEL SYSTÈME, ET PROCÉDÉ POUR LA GERMINATION DE GRAINES, ET LA CROISSANCE DE POUSSES, DE SEMIS ET DE PLANTES

(30) Priority: 30.09.2022 NL 2033191
(43) Date of publication of application: 06.08.2025
(73) Proprietor: Grovero Holding B.V., 1043 AM Amsterdam (NL)
(72) Inventor: BUKAI, Evyatar Moshe, 1043 AM Amsterdam (NL)
(74) Representative: Arnold & Siedsma
(86) International application number: PCT/NL2023/050415
(87) International publication number: WO 2024/072210

(56) References cited:
- CN-U- 210 987 536
- US-A- 5 056 260

## Description

### TECHNICAL FIELD

The present invention relates to a hydroponics system for the germination of seeds, and growth of sprouts, seedlings, and plants. The present invention further relates to the use of such a system for the hydroponic germination of seeds, and growth of sprouts, seedlings, and plants. The present invention furthermore relates to a method for the germination of seeds, and growth of sprouts, seedlings, and plants.

### BACKGROUND

Hydroponics is a type of horticulture which involves the sprouting or growing of plants without soil, by using water or water-based mineral nutrient solutions.

Nowadays, there exists a multitude of types of hydroponics systems. In all systems overall plant growth is understood to consist of two distinct cycles: a germination cycle and a growing cycle. In the germination cycle the seed is sprouting, developing its first root and a stem (since the stem is not yet exposed to light, and therefore no chlorophyl has been generated, the stem is basically colourless, or very light in colour). The sprout then develops into a seedling (seedlings, usually exposed to light, therefore producing chlorophyll, are green (and f.i. red in case of beetroot seedlings)). Seedlings are also called microgreens. In the growing cycle a sprout develops into a seedling and a seedling develops into a mature plant. A mature plant may be a flowering and/or fruit-bearing plant.

Most hydroponics systems require plants or at least sprouts in their growing cycle. Seeds are germinated first, separately, in a different system, a so-called nursery, and then transplanted to the actual hydroponics system where the plants or sprouts can grow.

An example of this is the Nutrient Film Technique (NFT). See for example GB1245581. After germination and sufficient growth, plants are placed into nutrient-rich water channels wherein a very shallow stream of water containing dissolved nutrients (the nutrient film) is re-circulated past the bare roots of plants, such that a thick root mat develops. Other examples are Deep Water Culture, in which the plants roots are submerged in water comprising nutrients continuously, and ebb and flow systems, where the plant roots are drenched in water just a few times a day. These systems thus involve external input, such as manual labour or an automated environmental or set-up alteration, in order for the sprouts or plants, grown in another system to be transplanted to the hydroponics system.

Further, in hydroponics systems, in addition to water, a solid medium may be used. Rock wool is the most widely used medium in hydroponics. Other examples of mediums used are wood fibre, sheep wool, coconut coir, rice husks, perlite, vermiculite, pumice, sand, and gravel. These systems thus require materials which will be used up, removed and disposed of or processed for recycling. The use, removal, disposal and/or recycling of a solid medium also involves additional manual or automated operation.

To avoid the growing of plants in easily contaminated, stagnant or reused water, a refinement of the aforementioned examples of hydroponics systems is the use of bubbles to oxygenate water to promote growth. See for example WO2020100193. The main disadvantage of this modification, is, again that it requires plants or at least sprouts to be transplanted from another system where the initial seeds were sprouted to the hydroponics system.

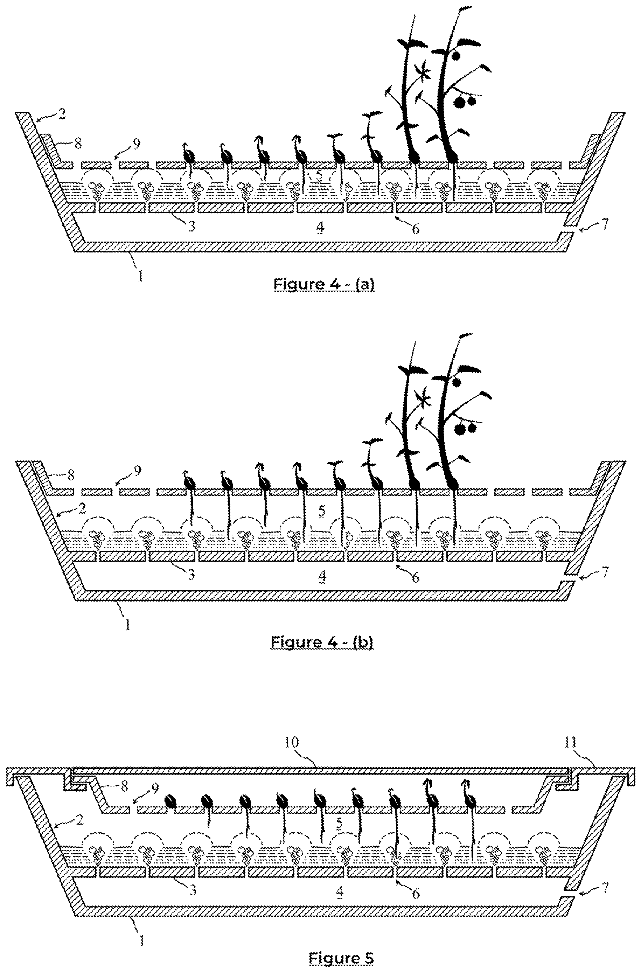

US4057930A describes, on the other hand, an apparatus for the germination of seeds in order to cultivate sprouts (fig. 5, 8 and 11 of US'930), the so-called nursery, including a seed supporting screen mounted a predetermined distance above a water reservoir in which an aerator grid is immersed to provide a circulating flow of moisture droplets and moisture laden air around and through the screen.

Further reference is made to CN 210 987 536 U, which discloses a radish seedling water culture device. The device comprises a water containing part, a culture solution for containing nutrient substances and a containing part for containing seeds, the containing part is clamped in the water containing part, the bottom wall of the containing part is communicated with the water containing part, and the culture solution in the water containing part is consistent with the upper surface of the bottom wall, so that the tops of the seeds uniformly and flatly laid on the bottom wall are exposed out of the liquid level of the culture solution; and the moisturizing cover body is movably arranged in the containing part in a covering manner.

In light of the foregoing, a new, further evolved, hydroponics system, the use of such system, as well as a new method for the germination, and growth of seeds into plants, would by highly desirable. In particular, there is a clear need in the art for a hydroponics system, the use of such system, as well as a method for the germination, and growth of seeds into plants, which can be used for or applied to the germination of seeds as well as growth of seeds into plants.

### SUMMARY

It is a principal object of the present invention to provide an improved hydroponics system, the use of such system, as well as a method for the germination, and growth of seeds into plants, in order to produce strong, verdant, nutritious and healthy sprouts, seedlings and plants.

It is a further object of the present invention to provide an hydroponics system low in maintenance, and therefore economic in use, due to saving of maintenance, repair and replacement costs.

The present invention relates in a first aspect to a hydroponics system for the germination, and growth of seeds into plants. The hydroponics system comprises a container comprising a receiving space. It further comprises a first wall element dividing the receiving space in a lower section arranged for receiving a gas and an upper section arranged for receiving a liquid. This first wall element is provided with first openings, allowing for a gas-liquid communication between the lower and upper section. The system further comprises a connection arrangement arranged for connecting a gas pressure device to the lower section. The system further comprises a support member arranged for maintaining the seeds and plants at a predefined distance above and substantially parallel to the first wall element. The support member comprises second openings for allowing humidification of seeds and roots and roots to grow through the second openings. The system further comprises a cover arrangement arranged for delimiting the hydroponics system at an upper side thereof. The cover arrangement, together with the container, encloses the support member.

In a second aspect, the present invention relates to the use of the hydroponics system according to any one of the preceding claims, for the hydroponic germination of seeds, and growth of seeds into plants.

In a third aspect, the present invention relates to a method for the germination, and growth of seeds into plants. This method comprises the step of providing liquid to the upper section of the receiving space of the hydroponics system according to the first aspect. The method further comprises the step of providing pressurized gas, via the connection arrangement and a gas pressure device, to the lower section. The method further comprises the step of providing seeds, seedlings and/or plants to the support member. The method further comprises the step of maintaining the support member at a predefined distance above the liquid. The support member comprises second openings for allowing roots to grow through the second openings, and allowing moisture laden air to reach seeds, seedlings and/or plants.

Any embodiment applicable to the first aspect of the present invention is correspondingly applicably for the second and third aspect according to the present invention.

At least one of the above-mentioned objects is achieved by the hydroponics system according to the present invention.

Without wishing to be bound by theory, the inventors believe that the method according to the present invention, leading to bubble formation in the liquid, and bursting of the bubbles at the surface, provides moisture-laden air between the liquid and the support member holding the seeds, seedlings and/or plants, allowing for the seeds and seedlings to be in a moist environment, and or humidification of seeds and/or roots, without the need to have roots that can reach the water; which in turn allows for germination of seeds and the first root growing. Depending on the distance between the support member and the liquid, bubbles may first come in contact with the support member before bursting. When the roots have reached the liquid, which is also well-oxygenated due to the air passing through the liquid, the plant's growth can be carried on within the same system. Further, the bursting of bubbles leads to a good circulation of humid air allowing for an optimal flow of oxygen and nutrients reaching seeds and/or roots. Further benefits of the system according to the invention are discussed below.

### BRIEF DESCRIPTION OF DRAWINGS

The present invention is described hereinafter with reference to the accompanying drawings in which embodiments of the present invention are shown and in which like reference numbers indicate the same or similar elements.

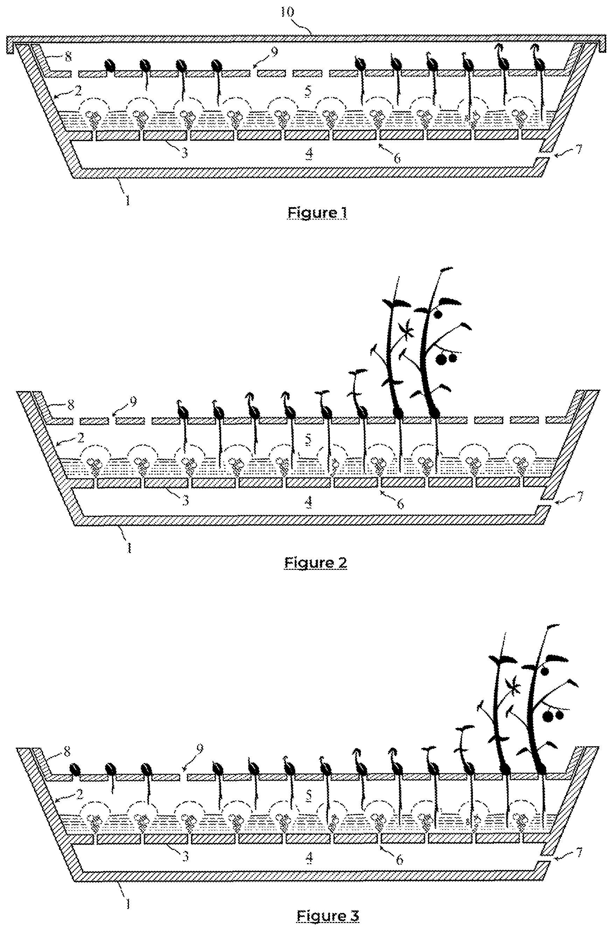

Figure 1 shows, in cross-sectional view, an example of a hydroponics system for the germination, and growth of seeds into plants according to the present invention, including a cover arrangement allowing for the consecutive germination and sprouting of seeds in a closed environment.
Figure 2 shows, in cross-sectional view, a second example of a hydroponics system for the germination, and growth of seeds into plants according to the present invention, after removal of the cover arrangement to allow space for the plants to grow after germination, and/or to grow flowers and/or fruits and to give plants access to light.
Figure 3 shows, in cross-sectional view, a third example of a hydroponics system for the germination, and growth of seeds into plants according to the present invention, wherein the system holds seeds, sprouts, seedlings, and plants with flowers and fruits, illuminating that the system can be used for seeds and plants in various growth cycles simultaneously, as well as for growth during consecutive cycles over time.
Figure 4 a) and b) shows, in cross-sectional view, a fourth example of a hydroponics system for the germination, and growth of seeds into plants according to the present invention, wherein the distance between the support member and the first wall element can be adjusted (from a) to b) and vice versa). The distance will be adjusted before start of the use of the system. However, the skilled person will appreciate that the distance may also be adjusted during growth cycles.
Figure 5 shows, in cross-sectional view, a fifth example of a hydroponics system for the germination, and growth of seeds into plants according to the present invention, wherein a second wall element is present, providing a partly cover of the receiving space at an upper side even if the cover arrangement would have been taken off.

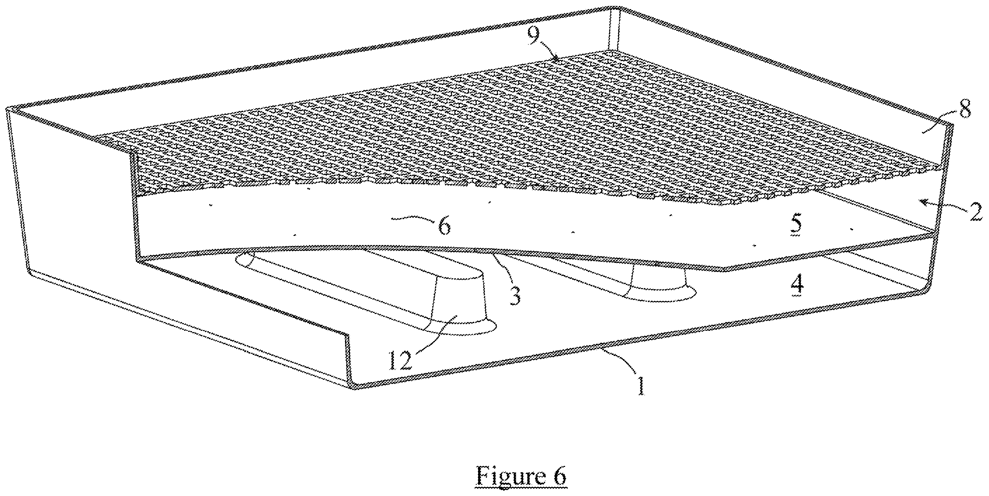

Figure 6 shows, in perspective view, the second example of a hydroponics system for the germination, and growth of seeds into plants according to the present invention.

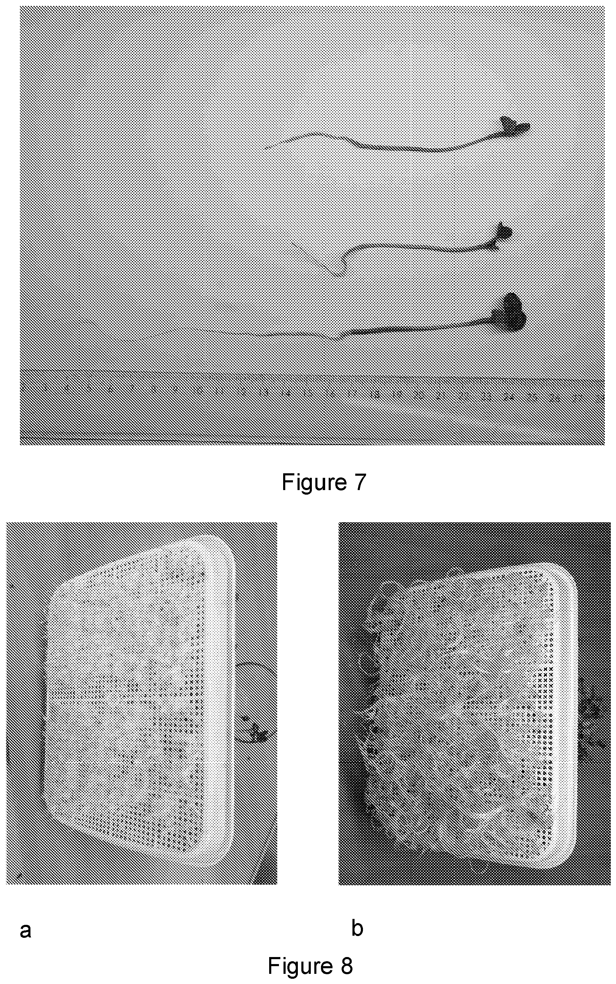

Figure 7 shows three different microgreens grown, from top to bottom, using a traditional ebb and flow hydroponics system with hemp mat solid medium, with coco mat solid medium, and using the hydroponics system according to the invention, without the use of a solid medium, respectively.
Figure 8 a) and b) show root growth through a support member, wherein seeds were grown using a traditional ebb and flow hydroponics system with coco mat solid medium a), and using the hydroponics system according to the invention, without the use of a solid medium b).

### Numbering Figures:

1. Container
2. Receiving space
3. First wall element
4. Lower section
5. Upper section
6. First openings
7. Connection arrangement
8. Support member
9. Second openings
10. Cover arrangement
11. Second wall element
12. Ribbing

### DETAILED DESCRIPTION OF DRAWINGS

Figure 1 shows a cross-sectional view of a container 1 comprising a receiving space 2 with a fist wall element 3 dividing the receiving space 2 in a lower section 4 and an upper section 5.

The lower section 4 holds a gas, for example air. The upper section 5 holds a liquid, for example water. This water may be enriched with nutrients such as minerals.

The first wall element 3 is provided with first openings 6, allowing the gas to pass from the lower section 4 into the liquid in the upper section 5. This creates bubbles in the liquid. The openings 6 may be uniformly distributed within the first wall element 3, creating bubbles across the wall element 3. The first openings 6 are for instance 0.1 - 1 mm. The size of the openings 6 influences the formation of the bubbles in terms of rate of bubble formation and bubble size. The nature of the liquid, specifically in terms of surface tension and viscosity, and the nature of the gas may also influence the characteristics of the bubble formation.

There is an opening in the lower section 4 that is a connection arrangement 7 arranged for connecting a gas pressure device (not shown) to the lower section 4. The gas pressure device (not shown) is for adding pressurized gas to the lower section 4. When gas is added to the lower section 4, it can flow through the first openings 6 to form gas bubbles in the liquid held in the upper section 5. The gas pressure maintained in the lower section 4 prevents the liquid to pass through the first openings 6 into the lower section 4. The diameter of the first openings 6 is preferably chosen to be such that, due to surface tension of the liquid, liquid can't flow through the first openings 6. Under such circumstances two-phase flow, where liquid and air can bulge past one another in opposite directions, can't occur. The gas pressure in the lower section 4 influences the rate and uniformity of bubble formation.

There is a support member 8 arranged for maintaining the seeds and plants at a predefined distance above and substantially parallel to the first wall element 3.

The bubbles, upon reaching the surface of the liquid, burst to create micro droplets in the space between the liquid and the support member 8. In an embodiment the bubbles may also reach a certain size, allowing them to touch the support member 8 first, before bursting. This space holds a gas, such as environmental air. The bursting of the bubbles at the surface of the liquid creates a flow in the air above it, keeping the humidified air in constant motion. The amount of humidification and the created air flow depend on the size of the bubbles, and the rate at which the bubbles burst.

The support member 8 comprises second openings 9 for allowing humidification of seeds and roots and roots to grow through the second openings 9. For example, the support member 8 can be a meshed tray. The size of the second openings 9 should be at least big enough for the moist air to reach to seeds, and not so big that the seeds fall through the openings 9. The roots of the seeds should be able to grow through the openings 9. The distance between the surface of the liquid and the support member 8 influences the level of humidification, as well as the amount of moisture, in the form of microdroplets, that reaches the seeds and roots. This distance should be large enough to allow bubble formation and bursting of the bubbles. The expected distance between the surface of the liquid and the support member 8 is between 0.1 - 7 cm, such as between, 0.2 and 5 cm, or more specifically between 0.5 and 2 cm.

The liquid level also may be of influence for the coalescing of bubbles before they reach the surface of the liquid. Coalescing of bubbles will lead formation of larger bubbles at the surface of the liquid and bursting. The liquid level is also a contributing factor to the extent to which the liquid is set in motion, which in turns may affect the accuracy of the location at which the bubbles form, coalesce and/or burst.

There further is a cover arrangement 10 which delimits the hydroponics system at the upper side and together with the container 1 enclose the support member 8. The cover arrangement 10 shown in Figure 1 is a lid. It creates a closed environment, maintaining the humidified gas (air) within the system. Another function of the cover arrangement 10 may be to provide a dark cover confining the space above the seeds, and/or providing a downward force, and thus providing resistance for the seeds to push back against, helping the seeds to shed their seed hulls and encourage stronger stem growth, mimicking the presence of soil on the seeds. The cover arrangement 10 may be removed for access of a user to the system. Another reason to remove the cover arrangement 10 is to allow space for the plants to grow after germination, and to give sprouts, seedlings and/or plants access to light.

Figure 2 shows another example of a hydroponics system according to the present invention. The system is very similar to the system of Figure 1, and the figure description provided for Figure 1 can be applied correspondingly for Figure 2, with the exception of the following. Figure 2 differs from Figure 1 in that no cover arrangement 10 is depicted. Removal of the cover arrangement 10 allows space for sprouts, seedlings and/or plants to grow after germination, for plants to grow flowers and/or fruits and to give plants access to light.

Figure 3 shows another example of a hydroponics system according to the present invention. The system is very similar to the system of Figure 2, and the figure description provided for Figure 2 can be applied correspondingly for Figure 3, with the exception of the following. Figure 3 differs from Figure 2 in that the system holds seeds, sprouts, seedlings, and plants with flowers and/or fruits, illuminating that the system can be used for seeds and plants in various growth cycles simultaneously, as well as for growth during consecutive cycles over time.

Figure 4 A and B shows another example of a hydroponics system according to the present invention. The system is very similar to the system of Figure 1 - 3, and the figure description provided for Figure 1 - 3 can be applied correspondingly for Figure 4A and B, with the exception of the following. Figure 4 A and B differs from Figure 1 - 3 in that the distance between the support member 8 and the first wall element 3 can be adjusted (from A to B and vice versa). The distance will be adjusted before start of the use of the system. However, the skilled person will appreciate that the distance may also be adjusted during growth cycles.

Figure 5 shows another example of a hydroponics system according to the present invention. The system is very similar to the system of Figure 1, and the figure description provided for Figure 1 can be applied correspondingly for Figure 5, with the exception of the following. Figure 5 differs from Figure 1 in that the upper section 5 comprises a second wall element 11 at a predefined distance of and substantially parallel to the first wall element 3 for receiving the support member 8. As can be seen from Figure 5, in this example the support member 8 is smaller in size than the width of the container 1 at its upper side. The second wall element 11 covers the receiving space 2 of the container 1 at the upper side together with the cover arrangement 10. The presence of the second wall element 11 provides a partly cover of the receiving space 2 at an upper side even when the cover arrangement 10 is taken off. The second wall element 11 and the support member 8 may be connected to each other. They may be removable from the container 1. The cover arrangement 10 in Figure 1 covers the whole upper surface of the container 1, and is supported by the container 1, but it may also be envisioned, such as in Figure 5, that the cover arrangement 10 is supported by the second wall element 11, and only provides a cover for the support member 8.

Figure 6 shows an example of a hydroponics system according to the present invention in perspective view. The system is very similar to the system of Figures 1 - 5, and the figure descriptions provided for Figures 1 - 5 can be applied correspondingly for Figure 6, with exception of the following. The perspective view of a hydroponics system according to the present invention reveals ribbings 12 which may be used to enforce the lower section 4 such that it doesn't deform under pressure f.i. using ribs to connect the bottom of the container 1 with the first wall element 3. The skilled person will appreciate that a variety of materials may be used for such ribbings 12, such as fibre glass or plastic.

Figure 7 shows three different microgreens grown, from top to bottom, using a traditional ebb and flow hydroponics system with hemp mat solid medium, with coco mat solid medium, and using the hydroponics system according to the invention, without the use of a solid medium, respectively.

Figure 8 A and B show root growth through a support member, wherein seeds were grown using a traditional ebb and flow hydroponics system with coco mat solid medium (A), and using the hydroponics system according to the invention, without the use of a solid medium (B).

### DESCRIPTION OF EMBODIMENTS

As stated above, the invention relates in a first aspect to a hydroponics system for the germination of seeds, and growing of seedlings and plants. In other words, the system is suitable for all growing cycles of a plant. This includes the germination of seeds to create sprouts, the development of sprouts into seedlings (microgreens), and the development of seedlings into plants, and the growing of plants until they reached maturity, for instance until they are flowering or fruit-bearing, and/or are ready for harvesting.

It is an object of the present invention to provide an hydroponic system in which seeds to be germinated, and growing seedlings, and/or plants are suspended at a predefined distance above a liquid whereby a humid, moist, environment is created above the liquid through the formation of bubbles, and the bursting of the bubbles at the surface of the liquid through the supply of gas to the liquid. The bursting bubbles disperse tiny water droplets, allowing seeds, and (roots of) seedlings and/or plants to obtain water and nutrients required for germination and growth, such that the hydroponics system can be used both for the germination of seeds and for growth of seeds into plants, without the need for pre-germination of seeds in a separate nursery.

In an embodiment of the first aspect of the present invention, the first openings 6 are uniformly distributed across the surface of the first wall element 3. The diameter of the first openings 6 is preferably chosen to be such that, due to surface tension of the liquid, liquid can't flow through the first openings 6. Under such circumstances two-phase flow, where liquid and air can bulge past one another in opposite directions, can't occur. In addition a gas pressure maintained in the lower section 4 prevents the liquid to pass through the first openings 6 into the lower section 4.

The skilled person will appreciate that the distance between first openings 6 may vary and that this influences bubble size and whether bubbles coalesce. The inventors found that if the distance between first holes allows for bubbles to reach a certain size without coalescing and thus allows bubbles to reach the support member 8 before bursting, this would result in the highest germination rate. The skilled person will appreciate that bubbling also allows the oxygenation of the liquid, which is beneficial for germination, for healthy roots and increased nutrient uptake.

A further advantage of a system comprising a receiving space 2 divided in a lower section 4 and upper section 5 by a first wall element 3 wherein the lower section 4 is arranged for receiving a gas and the upper section 5 arranged for receiving a liquid, and wherein the first wall element 3 is provided with first openings 6, allowing for a gas-liquid communication between the lower section 4 and upper section 5 is that the first wall element 3 can be cleaned and maintained. For instance algae, bacteria and lime sediments are easily removed, in particular from the first openings 6. In a specific embodiment, the predefined distance between the first wall element 3 and the support member 8 is between 1.1 and 7 cm. In a more specific embodiment, this predefined distance is between 1.1 and 5 cm. In an even more specific embodiment, this predefined distance is between 1.5 and 3 cm.

In a further embodiment of the first aspect, the second openings 9 are uniformly distributed across the surface of the support member 8. In a specific embodiment, the support member 8 is a meshed tray.

The afore described arrangement allows for a uniform formation and distribution of bubbles, as well as an optimal use of the available surface of the first wall element 3, and thus of the available surface of the liquid, for bubbling, which results in a high yield, and germination success of germinated seeds, grown seedlings, and/or plants. The efficient humidification achieved by the afore described arrangement, also results in the reduction of the need for liquid. The afore described arrangement thus allows for an economic use of (scarce) water, nutrients and other components of the liquid. The afore described arrangement further allows for germination of seeds and growth of seedlings and plants, without the need for a solid medium.

In another embodiment of the first aspect, the cover arrangement 10 is movable for allowing in a first position of the movable cover arrangement 10 access to the support member 8 and in a second position of the movable cover arrangement 10 blocking access to the support member 8. With 'access' in this context is meant access by a user of the system. The cover arrangement 10 may be in second position to create a closed system. This allows for the moisture to build up and be maintained within the system. Another function of the cover arrangement 10 may be to provide a dark cover confining the space above the seeds, and/or providing a downward force and thus providing resistance for the seeds to push back against, helping the seeds to shed their seed hulls and encourage stronger stem growth, mimicking the presence of soil on the seeds. The cover arrangement 10 may be placed in a first position to provide a user with access to the system. Another reason may be to provide more space for the sprouts, seedlings and/or plants to grow after germination, and to let sprouts, seedlings and/or plants have access to light.

A movable cover arrangement 10 allows therefore further optimization of the combined germination of seeds and growing of plants and seedlings within one system, allowing for the consecutive germination of seeds in a closed environment, and the growing of seedlings and plants in an open environment.

In a further embodiment, the upper section 5 comprises a second wall element 11 at a predefined distance of and substantially parallel to the first wall element 3 for receiving the support member 8.

In a further embodiment of the first aspect, the upper section 5 comprises a second wall element 11 at a predefined distance of and substantially parallel to the first wall element 3 for receiving the support member 8. In an embodiment, the predefined distance between the first wall element 3 and the second wall element 11 is between 1 and 7 cm. A second wall element 11 allows more control over the environment within the upper section 5, and thus allows for optimization of humidification of seeds, seedlings, and/or plants.

In a further embodiment of the first aspect, the system comprises an adjustment arrangement for adapting the predefined distance between the support member 8 and the first wall element 3 and/or between the second wall element 11 and the first wall element 3. An adjustment arrangement for adapting the predefined distance between the seeds, seedlings and/or plants and the liquid, allows for the optimization of the humidification of the seeds.

In a further embodiment of the first aspect, the hydroponics system further comprises a gas pressure device arranged for generating a pressurized gas, wherein the gas pressure device is communicatively coupled to the connection arrangement 7 for providing the pressurized gas to the lower section 4, via the connection arrangement 7. The gas pressure device may be anything that allows for pressurized gas to enter the lower section 4.

The skilled person will appreciate that embodiments of the first aspect of the hydroponics system of the present invention, may be made of opaque material, to block light. It is well known that some type of seeds prefer or even need darkness to germinate, while other types need or prefer light exposure. In addition, an advantage of using opaque material is that the blocking of light prevents algae formation.

As stated above, the present invention relates in a second aspect to the use of the hydroponics system according to any one of the preceding claims, for hydroponic germination of seeds, and growth of seeds into plants.

As stated above, the present invention relates in a third aspect to a method for the germination, and growth of seeds into plants.

In an embodiment of the third aspect, the method further comprises the step of delimiting, by a cover arrangement 10, the receiving space 2 at an upper side thereof and together with the container 1 enclose the support member 8.

In a further embodiment of the third aspect, the method further comprises the step of adjusting the predefined distance between the support member 8 and the liquid by the adjustment arrangement. The predefined distance between the support member 8 and the liquid may be adjusted prior to germination and growth to optimize the system for specific types of seeds, sprouts, seedlings and/or plants.

In a further embodiment of the third aspect, the liquid is or comprises water. The liquid may comprise nutrients (organic or inorganic), such as essential, variable and non-essential macro- and micro- nutrients, like nitrogen, potassium, phosphor, calcium, magnesium, cobalt, and minerals. In a specific embodiment, the liquid is water which comprises nutrients. Further, the pH of the liquid may be altered to achieve an optimal settings for specific types of seeds, sprouts, seedlings and/or plants.

In a further embodiment of the third aspect, the distance between the surface of the liquid and the support member 8 is between 0.1 - 7 cm, preferably between, 0.2 and 5 cm, more preferably between 0.5 and 2 cm. The optimal distance depends on the size of the bubbles upon bursting, and the desired amount of humidification.

In a further embodiment of the third aspect, a pressurized gas flow through the first openings 6 provides a supply of single and/or coalesced air bubbles, bursting at the surface of the liquid. Coalescing creates larger bubbles to burst at the surface of the liquid, leading to a different amount and rate of humidification. For some applications, it may be desirable to have little to none coalescence. For other applications, coalescence of bubbles prior to bursting may be preferable. The amount of coalescence is influenced, i.a. the diameter of the first openings 6 or by the level and nature of the liquid present in the upper section 5 of the container 1. The skilled person will appreciate that rate of humidification is, at least in part, dependent on the rate at which bubbles are created, which in turn is at least partly dependent on gas pressure.

In a further embodiment of the third aspect, a build-up of pressure in the lower section 4 is achieved for a pressurized gas flow through 90 - 100 % of the first openings 6. In an embodiment, the difference between the size of the first openings 6 (perforation diameter) and the volume of the lower section 4 of the container 1 allows for retaining statis build-up of pressure within the lower section 4 for providing a uniform gas distribution through said openings.

Compared to the system of US4057930A, the hydroponic system according to the present invention allows for efficient humidification of seeds, resulting in higher germination rate and higher yields. Furthermore, only a reduced amount of water is required. Moreover said system is low in maintenance and is easily cleaned.

The hydroponic apparatus, disclosed in US4057930A is meant to be used as a nursery, which is apparent from the fact, among other things, that the system includes a water heater, to maintain the temperature, normally, within a range of 20 to 33°C (68 to 92 DEG F) which would cause overgrowth of bacteria and fungi in case of the use of the system beyond the cultivation of sprouts. The system described in US4057930A comprises an aerator grid, disposed in an upper layer of the water, comprising tubular members. The usage of tubular members results in an uneven and sub-optimal distribution of perforations, along only part of the surface area of the water, and thus results in an uneven and sub-optimal humidification of the sprouting seeds. Further, tubes impart resistance to the flow of the air inside the tubes, causing friction and turbulence, which in turn results in pressure drop along the tube, resulting in uneven and sub-optimal humidification of the sprouting seeds. Furthermore, due to the placement of the aerator grid in an upper layer of the water, the system requires substantially more water, compared to other systems, solely because of the use of an aerator grid. In addition, due to this placement of the aeration grid in an upper layer of the water, the lower layer of water is undisturbed. This has as disadvantage, that algae and bacteria growth is stimulated in the stagnant layer of water. These algae and bacteria will not stay in the layer of water below the aeration grid, but will soon migrate to the upper layer. In addition the water may have to be replaced more often. Also, such an aerator grid needs regular cleaning, maintenance, and, from time to time, repair and even replacement.

The scope of the present invention is defined by the appended claims.

### EXAMPLES

The present invention is further elucidated based on the Examples below which are illustrative only.

### Example 1

### Material and methods

### Parameter settings

In-house experiments were conducted using a hydroponic system according to the invention (hereafter indicated with "HS"). The system had the following parameters:
- Distance between the bottom of the container (1) and the first wall element (3): 9 mm
- Distance between first (3) and second wall element (11): 36 mm
- Distance between the first wall element (3) and the support member (8): 19 mm
- Support member (8); size second openings (9), unless stated otherwise: 1.5 mm x 1.5 mm
- Liquid level: 18 mm
- First wall element (3); diameter of first openings (6): 0.6 mm
- Air pressure: 0.16 bar (2.3 PSI)
- Distance between support member (8) and cover arrangement (10): 40 mm

### Growing space

The HS system was placed in a closed-off growing space for the duration of germination and growing cycles.

The growing space had air temperature and humidity monitored daily using SHT31-D temperature & humidity sensors. Within the growing space, air humidity was monitored constant at around 85%, while temperature was measured constant at 22 °C. For lighting purposes, a single full spectrum 24W Barrina T8 grow light was placed 30 cm above the system, and turned on from the 4^{th} day onwards during transition from the germination cycle to the growing cycle.

### Microgreen

Red radish (Raphanus sativus) "Sango" was used throughout the experiments.

### Irrigation

As per the present invention, irrigation was achieved through the bursting of bubbles at the surface of the liquid placed in the upper section (5) of the receiving space (2). Air was introduced in the system for 20 min, generating bubble bursting, and stopped for the following 40 min. This was repeated throughout the whole experiment; from sown seeds to the moment of harvest (thus for both germination and growing cycles). Tap water was used for irrigation for the first 3 days. pH was measured to be on average 7.8, while water hardness concentration was measured to be 230 ppm.

### Fertilization

On day 4 past sowing, essential micro-macro nutrients were introduced to the existing water contents within the system. The nutrient solution is containing essential micro & macro nutrients: Terra Aquatica TriPart Original FloraGro 3-1-6. The fertilizer solution was obtained by mixing 1ml of FloraGro per 1L of water. The fertilizer solution was measured to have: 560 ppm (700 scale) and pH 6.

During transition between germination cycle and growing cycle for the hydroponic system according to the invention (HS): the cover arrangement (10) was removed, giving germinated sprouts light and space for further growth.

### Calculation of germination rate

On day 8 the germination rate was calculated as follows: $Germination rate \left(%\right) = \frac{No . of germinated seeds}{No . of sown seeds} \times 100$ $Seed density = Sown seeds \left(g\right) in 1 {m}^{2}$

Microgreens from different locations of the trays (8) were measured with a ruler from stem base to top of the seedlings. Also, microgreens including their root were measured with a ruler from top of the seedling (microgreen) to tip of root. Finally, microgreens' first leaves (cotyledons) lengths were measured, this was achieved by taking the biggest of the cotyledon between the two of a given microgreen and measuring it lengthwise.

### Calculation Fresh weight yield

Microgreens were then harvested by cutting the seedlings at the base of the seedlings stems (lower hypocotyl section). Harvested microgreens from each farming cycle were then weighed to determine their fresh weight yield.

### Results

### Humidification as a function of parameters

Ha: Distance between liquid surface and support member (8)
Hw: Liquid level
d: first openings (6) diameter
LP: Low pressure maintained within lower section (4): 0.05 bar (0.8 PSI)
HP: High pressure maintained within lower section (4): 0.12 bar (1.8 PSI)
Initial (starting) humidity 55%
Temperature within the system 20.8°C
Humidity was measured above the support member (8)

**Table 1: Humidity (%) reached in 5 min and time (s) to reach 85% of humidity for different parameters**

| | **Parameters** | | **Humidity (%) reached in 5 min** | | **Time (s) to reach 85% of humidity** | |
|---|---|---|---|---|---|---|
| | **Hw (mm)** | **Ha (mm)** | **For LP** | **For HP** | **For LP** | **For HP** |
| **d = 0.6mm** | 10 | 10 | 89.50 | 89.67 | 162 | 188 |
| | 10 | 30 | 88.26 | 88.60 | 170 | 153 |
| | 10 | 50 | 88.12 | 88.35 | 208 | 124 |
| | 30 | 10 | 89.94 | 90.22 | 149 | 113 |
| | 30 | 30 | 88.86 | 89.51 | 177 | 136 |
| | 30 | 50 | 88.24 | 89.00 | 201 | 157 |
| | 50 | 10 | 90.98 | 93.06 | 135 | 88 |
| | 50 | 30 | 90.79 | 92.55 | 123 | 77 |
| | 50 | 50 | 90.63 | 92.70 | 113 | 73 |
| **d = 1mm** | 10 | 10 | 90.19 | 91.29 | 124 | 108 |
| | 10 | 30 | 89.17 | 90.99 | 136 | 78 |
| | 10 | 50 | 88.45 | 90.01 | 177 | 74 |
| | 30 | 10 | 88.81 | 89.15 | 146 | 122 |
| | 30 | 30 | 88.44 | 89.03 | 159 | 137 |
| | 30 | 50 | 88.12 | 88.78 | 172 | 152 |
| | 50 | 10 | 90.25 | 90.61 | 130 | 100 |
| | 50 | 30 | 89.96 | 90.29 | 119 | 85 |
| | 50 | 50 | 89.57 | 90.03 | 112 | 79 |

The results show that, among other findings, higher humidity is overall being reached in 5 minutes when high pressure is introduced to the lower section (4), compared to low pressure.

For both low pressure and high pressure, the highest humidity reached in 5 minutes is when the first opening (6) diameter is 0.6 mm, the liquid level is 50 mm and the distance between the liquid surface and the support member (8) is 10 mm.

As for the time it takes to reach 85% of humidity (from the initial 55%), it can be noted that the shortest times recorded to reach such humidity, for low and high pressures within the lower section (4), for first openings (6) diameter of 0.6 mm are when the liquid level (Hw) is 50 mm.

For first openings (6) diameter of 1 mm, the shortest time to reach 85% of humidity is recorded for both liquid level (Hw) of 10 mm and 50 mm.

### Germination rate and fresh weight yield with respect to liquid level

**Table 2: Germination rate (%) and Fresh Weight Yield (g/m²) as a function of water level Hw (mm)**

| **Liquid level Hw (mm)** | **Germination rate (%)** | **Fresh Weight Yield (g/m²)** |
|---|---|---|
| 5 | 67.3 | 849.29 |
| 10 | 79.3 | 923.84 |
| 15 | 92.3 | 1293.04 |
| 20 | 92.6 | 1333.45 |
| 25 | 90.7 | 1193.53 |
| 30 | 87.2 | 1176.28 |

### Sown seed density: 160 g/m²

The results show that the sweet spot of liquid level for the chosen system parameters is at 15 mm and 20 mm. The inventor noticed that in the system used in these examples that at a liquid level of 10 mm and lower, there was not enough water, and thus time, for bubbles to form and coalesce. Only very small bubbles were bursting, and the tiny liquid droplets didn't appear to reach the seeds and didn't appear to be able to generate moisture laden air. In contrast, at a liquid level of 25 mm and higher, the more than effective formation and coalescence of bubbles caused such turbulence within the liquid, and coalescence and burst of bubbles at unexpected locations, that some seeds, although initially uniformly sown on top the support member (8) did not get homogeneous access to ideal environment (irrigation).

### Example 2

### Effect of seed density on fresh weight yield

Three HS setups were prepared and handled according to Example 1, with the difference that in total 6 different seed densities were sown and tested. The mean values from obtained results are presented below.

### Results

**Table 3: Effect of seed density (g/m²) on Fresh Weight Yield (g/m²) grown in HS**

| **Seed density (g/m²)** | **Fresh weight yield (g/m²)** |
|---|---|
| 82.36 | 631.32 |
| 109.81 | 862.09 |
| 137.27 | 1051.89 |
| 164.72 | 1289.22 |
| 256.74 | 1910.48 |
| 342.32 | 2750.88 |

The results show that the trend of seed density versus obtained fresh weight yield is increasing almost linearly. Thus, a higher seed density (including 342.32 g/m²) results in a higher obtained harvest fresh weight yield for the tested seed densities.

The tested samples did not have fungal disease infections, and root rot disease was still not observed for sown seed densities of 342.32 g/m². The inventor believes said results are partly related to the fact that no solid medium is used, which would contain (stagnant) water allowing for such diseases to form. The lack of solid medium also allows for further space for sown seeds to germinate and grow in - as well as allowing for increased movement of air, reinforced further by the constant movement of moisture laden air through the bursting of bubbles.

### Example 3

### Comparative experiments with serpentine tubing system

The HS setup was prepared and handled according to Example 1. The embodiment of the invention was compared to a similar system, with the difference that a serpentine tubing (hereafter referred to as "ST") was used instead of a lower section (4) for the supply of air in order to generate bubbles in and at the surface of the liquid and to oxygenate the liquid. Thus, in this system (ST) for a comparative example no first wall (3) was present. The serpentine tubing used for the comparative example had the following parameters:
- Outer Diameter: 9 mm
- Inner Diameter: 6 mm
- Material: Vinyl

Perforations along the tubing were of same diameter and correlative distances between them as found in HS.

In ST, as in HS, air was introduced in the system for 20 min, generating bubble bursting, and stopped for the following 40 min. This was repeated throughout the whole experiment; from sown seeds to the moment of harvest (thus for both germination and growing cycles).

### Results

**Table 4: Germination rate (%) and Fresh Weight Yield (g/m²) for lower section (HS) and serpentine tubing (ST) setups**

| | **Germination rate (%)** | | **Fresh Weight Yield (g/m²)** | |
|---|---|---|---|---|
| **Seed density (g/m²)** | **HS** | **ST** | **HS** | **ST** |
| 82.36 | 92.1 | 86.4 | 631.32 | 537.53 |
| 109.81 | 91.6 | 84.5 | 862.09 | 733.75 |
| 137.27 | 92.5 | 85.7 | 1051.89 | 884.31 |
| 164.72 | 91.1 | 85.9 | 1289.22 | 1033.48 |

The results show that with any seed density tested, the system according to the invention (HS) gave a substantially higher germination rate and fresh weight yield than the system with the serpentine tubing (ST).

Throughout the experiment, it could be observed that for the serpentine tubing (ST), the further the perforations in the tubing were from the source of introduced pressurized air, the less (efficient) were the obtained bubbles. As such, efficiency throughout the whole surface area of the receiving space was not met as in HS.

### Example 4

### Comparative experiments between hydroponic techniques (and growing medium)

The HS setup was prepared and handled according to Example 1. For comparison purposes, a traditional hydroponic technique, an ebb and flow hydroponic system, was setup. This is a technique where the growing trays are placed above a liquid reservoir. Two different growing mediums were used for such technique: coco mat and hemp mat (hereafter indicated with "CM" and "HM" respectively). The seeds were sown directly upon these mediums.

The CM and HM (ebb and flow systems) were placed in a nursery for the duration of their germination cycle, and placed in the closed-off growing space for the duration of their growing cycles.

For said hydroponic systems, during germination cycle, the trays were irrigated using a pressure sprayer twice a day from the top of the tray, before being replaced in the nursery. During the growing cycle, the trays were placed within the closed-off growing space. As per traditional ebb and flow irrigation, a pump filled the upper trays with water (nutrient solution), after which the solution drained back down into a reservoir. This was repeated 6 times in 24h. This kept the mediums, coco mat and hemp mat, regularly flushed with water and air.

As for the HS setup, tap water was used for irrigation for the first 3 days. pH was measured to be on average 7.8, while water hardness concentration was measured to be 230 ppm.

On day 4 past sowing, essential micro-macro nutrients were introduced to the existing water contents within the ebb and flow systems. The fertilizer solution was obtained by mixing 1ml of FloraGro per 1L of water. The fertilizer solution was measured to have: 560 ppm (700 scale) and pH 6.

For both CM and HM, the used meshed trays were of similar dimensions as of the HS: 34cm x 25cm x 3cm. Nevertheless, while for HS no medium was placed on top of those trays, a coco mat of 10mm thickness and a hemp mat of 10mm thickness were placed on top of the ebb and flow system trays (CM and HM respectively).

For all trays, 9.25 g of seeds per tray were sown manually on the surface of each tray - unless stated otherwise. This equals to a seed density of 158.15 g/m².

Microgreens were harvested by cutting the seedlings at the base of their stems. Red radish (Raphanus sativus) "Sango" was used throughout the experiments.

### Results

**Table 5: Germination rate (%), Fresh Weight Yield (g/m²), mean shoot height (mm) and mean leaf length (mm) for different hydroponic systems / mediums**

| **System / Growing Medium** | **Germination rate (%)** | **Fresh Weight Yield (g/m²)** | **Mean shoot height (mm)** | **Mean leaf length lengthwise measurement (mm)** |
|---|---|---|---|---|
| **HS** | 92.64 | 2748.8 | 82.2 | 1.6 |
| **CM** | 90.04 | 2229.9 | 80.6 | 1.5 |
| **HM** | 89.25 | 2058.2 | 77.8 | 1.5 |

These results show that germination rate, fresh weight yield, mean shoot height and mean leaf length were increased in the HS setup, as compared to a traditional ebb and flow setup with different growing mediums: CM and HM.

### Example 5

### Comparative experiments between hydroponic techniques (and growing medium) for different seed densities

Three HS setups, three CM setups and three HM setups were prepared and handled according to Examples 1 and 4, with the difference that in total 6 different seed densities were tested for each setup (HS, CM, and HM). The obtained mean values are noted below.

### Results

**Table 6: Germination rate (%) and Fresh Weight Yield (g/m²) with respect to different seed densities (g/m²) for different hydroponic systems / mediums**

| | **Germination rate (%)** | | | **Fresh Weight Yield (g/m²)** | | |
|---|---|---|---|---|---|---|
| **Seed density (g/m²)** | **HS** | **CM** | **HM** | **HS** | **CM** | **HM** |
| 82.36 | 92.1 | 90.0 | 90.4 | 631.32 | 573.74 | 557.70 |
| 109.81 | 91.6 | 91.5 | 89.7 | 862.09 | 792.26 | 742.90 |
| 137.27 | 92.5 | 90.4 | 89.9 | 1051.89 | 964.93 | 868.97 |
| 164.72 | 91.1 | 89.8 | 89.2 | 1289.22 | 1092.91 | 1035.69 |
| 256.74 | 91.5 | 89.5 | 87.6 | 1910.48 | 1581.04 | 1496.66 |
| 342.32 | 92.6 | 87.1 | 85.8 | 2750.88 | 2044.12 | 1836.16 |

The results show that the germination rate is constant for increasing seed densities for HS, while germination rates in CM and HM is decreasing with increasing seed densities.

Again, here the inventor believes such results are due to the well maintained and ideal settings at which sown seeds can successfully germinate in the hydroponics system according to the invention: great humidity level and constant movement of moist laden air from bubble bursting.

The results show that the increase of the fresh weight yield (g/m²) for increasing seed density (g/m²) was steeper for the embodiment of the invention (HS), compared to CM and HM, and got even steeper from a seed density of 256.74 g/m².

## Claims

1. A hydroponics system for the germination, and growth of seeds into plants, the hydroponics system comprising:
- a container (1) comprising a receiving space (2);
- a first wall element (3) dividing the receiving space (2) in a lower section (4) arranged for receiving a gas and an upper section (5) arranged for receiving a liquid, and wherein the first wall element (3) is provided with first openings (6), allowing for a gas-liquid communication between the lower (4) and upper section (5);
- a connection arrangement (7) arranged for connecting a gas pressure device to the lower section (4);
- a support member (8) arranged for maintaining the seeds and plants at a predefined distance above and substantially parallel to the first wall element (3), wherein the support member (8) comprises second openings (9) for allowing humidification of seeds and roots and roots to grow through the second openings (9)
- a cover arrangement (10) arranged for delimiting the hydroponics system at an upper side thereof and together with the container (1) enclose the support member (8).

2. The hydroponics system according to claim 1, wherein the first openings (6) are uniformly distributed across the first wall element (3).

3. The hydroponics system according to any one of claim 1 and 2, wherein the second openings (9) are uniformly distributed across the surface of the support member (8), preferably wherein the support member (8) is a meshed tray.

4. The hydroponics system according to any one of the previous claims, wherein the cover arrangement (10) is movable for allowing in a first position of the movable cover arrangement (10) access to the support member (8) and in a second position of the movable cover arrangement (10) blocking access to the support member (8).

5. The hydroponics system according to any one of the previous claims, wherein the upper section (5) comprises a second wall element (11) at a predefined distance of and substantially parallel to the first wall element (3) for receiving the support member (8).

6. The hydroponics system according to any one of the previous claims, wherein the system comprises an adjustment arrangement for adapting the predefined distance between the support member (8) and the first wall element (3) and/or between the second wall element (11) and the first wall element (3).

7. The hydroponics system according to any one of the preceding claims, wherein the hydroponics system further comprises:
- the gas pressure device arranged for generating a pressurized gas, wherein the gas pressure device is communicatively coupled to the connection arrangement (7) for providing the pressurized gas to the lower section (4), via the connection arrangement (7).

8. Use of the hydroponics system according to any one of the preceding claims, for the germination of seeds, and growth of seeds into plants.

9. Method for the germination, and growth of seeds into plants, the method comprising the steps of:
- providing liquid to the upper section (5) of the receiving space (2) of the hydroponics system according to claims 1 - 7;
- providing pressurized gas, via the connection arrangement (7) and the gas pressure device, to the lower section (4);
- providing seeds, seedlings and/or plants to the support member (8);
- maintaining the support member (8) at a predefined distance above the liquid, wherein the support member (8) comprises second openings (9) for allowing gas-liquid communication and roots to grow through the second openings (9).

10. The method according to claim 9, wherein the method further comprises the step of:
- delimiting, by a cover arrangement (10), the receiving space (2) at an upper side thereof and together with the container (1) enclose the support member (8).

11. The method according to any one of claims 9 and 10, wherein the method further comprises the step of:
- adjusting the predefined distance between the support member 8 and the liquid by the adjustment arrangement.

12. The method according to any one of claims 9 - 11, wherein the liquid is or comprises water.

13. The method according to any one of claims 9 - 12, wherein the distance between the surface of the liquid and the support member (8) is between 0.1 and 7 cm, preferably between, 0.2 and 5 cm, more preferably between 0.5 and 2 cm.

14. The method according to any one of claims 9 - 13, wherein a pressurized gas flow through the first openings (6) provides a supply of single and/or coalesced air bubbles, bursting at the surface of the liquid.

15. The method according to any one of claims 9 - 14, wherein a build-up of pressure is achieved for a pressurized gas flow through 90 - 100 % of the first openings (6).

## Patentansprüche

1. Hydrokultursystem für die Keimung und ein Wachstum von Samen zu Pflanzen, das Hydrokultursystem umfassend:
- einen Behälter (1), umfassend einen Aufnahmeraum (2);
- ein erstes Wandelement (3), das den Aufnahmeraum (2) in einen unteren Abschnitt (4), der zum Aufnehmen eines Gases angeordnet ist, und einen oberen Abschnitt (5), der zum Aufnehmen einer Flüssigkeit angeordnet ist, unterteilt, und wobei das erste Wandelement (3) mit ersten Öffnungen (6) versehen ist, die einen Gas-Flüssigkeits-Austausch zwischen dem unteren (4) und dem oberen Abschnitt (5) ermöglichen;
- eine Verbindungsanordnung (7), die zum Verbinden einer Gasdruckvorrichtung mit dem unteren Abschnitt (4) angeordnet ist;
- ein Trägerteil (8), das zum Beibehalten der Samen und Pflanzen in einem festgelegten Abstand über und im Wesentlichen parallel zu dem ersten Wandelement (3) angeordnet ist, wobei das Trägerteil (8) zweite Öffnungen (9) zum Ermöglichen einer Befeuchtung von Samen und Wurzeln und um Wurzeln durch die zweiten Öffnungen (9) wachsen zu lassen, umfasst
- eine Abdeckanordnung (10), die zum Begrenzen des Hydrokultursystems an einer oberen Seite davon und, zusammen mit dem Behälter (1), zum Umgeben des Trägerteils (8) angeordnet ist.

2. Hydrokultursystem nach Anspruch 1, wobei die ersten Öffnungen (6) über das erste Wandelement (3) hinweg gleichmäßig verteilt sind.

3. Hydrokultursystem nach einem der Ansprüche 1 und 2, wobei die zweiten Öffnungen (9) über die Oberfläche des Trägerteils (8) hinweg gleichmäßig verteilt sind, vorzugsweise wobei das Trägerteil (8) eine Gitterschale ist.

4. Hydrokultursystem nach einem der vorstehenden Ansprüche, wobei die Abdeckanordnung (10) zum Ermöglichen eines Zugangs, in einer ersten Position der beweglichen Abdeckanordnung (10), zu dem Trägerteil (8) und, in einer zweiten Position der beweglichen Abdeckanordnung (10), Blockieren des Zugangs zu dem Trägerteil (8), beweglich ist.

5. Hydrokultursystem nach einem der vorstehenden Ansprüche, wobei der obere Abschnitt (5) ein zweites Wandelement (11) in einem festgelegten Abstand von und im Wesentlichen parallel zu dem ersten Wandelement (3) zum Aufnehmen des Trägerteils (8) umfasst.

6. Hydrokultursystem nach einem der vorstehenden Ansprüche, wobei das System eine Einstellanordnung zum Anpassen des festgelegten Abstands zwischen dem Trägerteil (8) und dem ersten Wandelement (3) und/oder zwischen dem zweiten Wandelement (11) und dem ersten Wandelement (3) umfasst.

7. Hydrokultursystem nach einem der vorstehenden Ansprüche, wobei das Hydrokultursystem ferner umfasst:
- die Gasdruckvorrichtung, die zum Generieren eines druckbeaufschlagten Gases angeordnet ist, wobei die Gasdruckvorrichtung mit der Verbindungsanordnung (7) zum Bereitstellen des druckbeaufschlagten Gases an den unteren Abschnitt (4) über die Verbindungsanordnung (7) wirkgekoppelt ist.

8. Verwendung des Hydrokultursystems nach einem der vorstehenden Ansprüche für die Keimung von Samen und das Wachstum von Samen zu Pflanzen.

9. Verfahren für die Keimung und das Wachstum von Samen zu Pflanzen, das Verfahren umfassend die Schritte:
- Bereitstellen von Flüssigkeit an den oberen Abschnitt (5) des Aufnahmeraums (2) des Hydrokultursystems nach den Ansprüchen 1 bis 7;
- Bereitstellen von druckbeaufschlagtem Gas über die Verbindungsanordnung (7) und die Gasdruckvorrichtung an den unteren Abschnitt (4);
- Bereitstellen von Samen, Setzlingen und/oder Pflanzen an das Trägerteil (8);
- Beibehalten des Trägerteils (8) in einem festgelegten Abstand über der Flüssigkeit, wobei das Trägerteil (8) zweite Öffnungen (9) zum Ermöglichen eines Gas-Flüssigkeits-Austausches und um Wurzeln durch die zweiten Öffnungen (9) wachsen zu lassen, umfasst.

10. Verfahren nach Anspruch 9, wobei das Verfahren ferner den Schritt umfasst:
- Begrenzen, durch eine Abdeckanordnung (10), des Aufnahmeraums (2) an einer oberen Seite davon und, zusammen mit dem Behälter (1), Umgeben des Trägerteils (8).

11. Verfahren nach einem der Ansprüche 9 und 10, wobei das Verfahren ferner den Schritt umfasst:
- Einstellen des festgelegten Abstands zwischen dem Trägerteil 8 und der Flüssigkeit durch die Einstellanordnung.

12. Verfahren nach einem der Ansprüche 9 bis 11, wobei die Flüssigkeit Wasser ist oder dieses umfasst.

13. Verfahren nach einem der Ansprüche 9 bis 12, wobei der Abstand zwischen der Oberfläche der Flüssigkeit und dem Trägerteil (8) zwischen 0,1 und 7 cm, vorzugsweise zwischen 0,2 und 5 cm, mehr bevorzugt zwischen 0,5 und 2 cm liegt.

14. Verfahren nach einem der Ansprüche 9 bis 13, wobei ein Strom von druckbeaufschlagtem Gas durch die ersten Öffnungen (6) eine Zufuhr von einzelnen und/oder koaleszierten Luftblasen bereitstellt, die an der Oberfläche der Flüssigkeit zerplatzen.

15. Verfahren nach einem der Ansprüche 9 bis 14, wobei ein Druckaufbau für einen Strom von druckbeaufschlagtem Gas durch 90 - 100 % der ersten Öffnungen (6) erreicht wird.

## Revendications

1. Système hydroponique pour la germination et la croissance de graines en plantes, le système hydroponique comprenant :
- un récipient (1) comprenant un espace de réception (2) ;
- un premier élément paroi (3) divisant l'espace de réception (2) en une section inférieure (4) agencée pour recevoir un gaz et une section supérieure (5) agencée pour recevoir un liquide, et dans lequel le premier élément paroi (3) est pourvu de premières ouvertures (6), permettant une communication gaz-liquide entre la section inférieure (4) et la section supérieure (5) ;
- un agencement de liaison (7) agencé pour lier un dispositif de pression de gaz à la section inférieure (4) ;
- un élément support (8) agencé pour maintenir les graines et les plantes à une distance prédéfinie au-dessus du premier élément paroi (3) et sensiblement parallèlement à celui-ci, dans lequel l'élément support (8) comprend de secondes ouvertures (9) pour permettre l'humidification des graines et des racines et aux racines de croître à travers les secondes ouvertures (9)
- un agencement de couverture (10) agencé pour délimiter le système hydroponique au niveau d'un côté supérieur de celui-ci et enfermer conjointement avec le récipient (1) l'élément support (8).

2. Système hydroponique selon la revendication 1, dans lequel les premières ouvertures (6) sont uniformément réparties sur le premier élément paroi (3).

3. Système hydroponique selon l'une quelconque de la revendication 1 et 2, dans lequel les secondes ouvertures (9) sont uniformément réparties sur la surface de l'élément support (8), de préférence dans lequel l'élément support (8) est un plateau maillé.

4. Système hydroponique selon l'une quelconque des revendications précédentes, dans lequel l'agencement de couverture (10) est mobile pour permettre, dans une première position de l'agencement de couverture (10) mobile, un accès à l'élément support (8) et dans une seconde position de l'agencement de couverture (10) mobile, le blocage de l'accès à l'élément support (8).

5. Système hydroponique selon l'une quelconque des revendications précédentes, dans lequel la section supérieure (5) comprend un second élément paroi (11) à une distance prédéfinie du premier élément paroi (3) et sensiblement parallèle à celui-ci pour recevoir l'élément support (8).

6. Système hydroponique selon l'une quelconque des revendications précédentes, dans lequel le système comprend un agencement d'ajustement permettant d'adapter la distance prédéfinie entre l'élément support (8) et le premier élément paroi (3) et/ou entre le second élément paroi (11) et le premier élément paroi (3).

7. Système hydroponique selon l'une quelconque des revendications précédentes, dans lequel le système hydroponique comprend en outre :
- le dispositif de pression de gaz agencé pour générer un gaz sous pression, dans lequel le dispositif de pression de gaz est accouplé en communication à l'agencement de liaison (7) pour fournir le gaz sous pression à la section inférieure (4), par l'intermédiaire de l'agencement de liaison (7).

8. Utilisation du système hydroponique selon l'une quelconque des revendications précédentes, pour la germination de graines et la croissance de graines en plantes.

9. Procédé pour la germination et la croissance de graines en plantes, le procédé comprenant les étapes consistant à :
- fournir un liquide à la section supérieure (5) de l'espace de réception (2) du système hydroponique selon les revendications 1 à 7 ;
- fournir un gaz sous pression, par l'intermédiaire de l'agencement de liaison (7) et du dispositif de pression de gaz, à la section inférieure (4) ;
- fournir des graines, des semis et/ou des plantes à l'élément support (8) ;
- maintenir l'élément support (8) à une distance prédéfinie au-dessus du liquide, dans lequel l'élément support (8) comprend de secondes ouvertures (9) pour permettre une communication gaz-liquide et aux racines de croître à travers les secondes ouvertures (9).

10. Procédé selon la revendication 9, dans lequel le procédé comprend en outre l'étape consistant à :
- délimiter, par un agencement de couverture (10), l'espace de réception (2) au niveau d'un côté supérieur de celui-ci et enfermer conjointement avec le récipient (1) l'élément de support (8).

11. Procédé selon l'une quelconque des revendications 9 à 10, dans lequel le procédé comprend en outre l'étape consistant à :
- régler la distance prédéfinie entre l'élément support (8) et le liquide par l'agencement de réglage.

12. Procédé selon l'une quelconque des revendications 9 à 11, dans lequel le liquide est ou comprend de l'eau.

13. Procédé selon l'une quelconque des revendications 9 à 12, dans lequel la distance entre la surface du liquide et l'élément support (8) est comprise entre 0,1 et 7 cm, de préférence entre 0,2 et 5 cm, plus préférablement entre 0,5 et 2 cm.

14. Procédé selon l'une quelconque des revendications 9 à 13, dans lequel un flux de gaz sous pression à travers les premières ouvertures (6) fournit une alimentation en bulles d'air simples et/ou coalescentes, éclatant au niveau de la surface du liquide.

15. Procédé selon l'une quelconque des revendications 9 à 14, dans lequel une accumulation de pression est obtenue pour un flux de gaz sous pression à travers 90 à 100 % des premières ouvertures (6).
